# EUROPEAN PATENT APPLICATION

(11) **EP 0 705 894 A2**
(43) Date of publication of application: **10.04.1996**
(21) Application number: 95402152.3
(22) Date of filing: 26.09.1995
(51) Int. Cl.: C09J 7/02

(54) **Adhesive tape construction**

(30) Priority: 26.09.1994 US 312330
(71) Applicant: MINNESOTA MINING AND MANUFACTURING COMPANY, St. Paul, Minnesota 55133-3427 (US)
(72) Inventor: Uchiya, Tomoaki, Sumitomo 3M Limited, Setagaya-ku, Tokyo 158 (JP); Johnson, Dee Lynn, c/o Minnesota Mining And, Saint Paul, Minnesota 55133-3427 (US)
(74) Representative: Texier, Christian

(57) **Abstract**

To provide adhesive tape, particularly a masking tape, with a plastic backing layer which has good hand tearability when torn at a desired length, which does not break when the tape is peeled off from the masked section, and which may be peeled off rapidly. The adhesive tape comprises the following features: (1) a tape-like backing layer which includes a tape-like plastic film; (2) an adhesive layer on one principal surface of the backing layer; and (3) an easily tearable section provided in a lengthwise direction at roughly the center with respect to the width of the tape-like backing layer. Preferably, such a tape further includes (4) a light-tacky section or non-tacky section provided in a lengthwise direction on the side of the surface of the adhesive layer which is to be contacted with a substrate to be adhered to, at roughly the center with respect to the width of the adhesive layer facing the easily tearable section.

## Description

### Technical Field

The present invention relates generally to adhesive tape constructions, and more particularly to masking,tape which is used for the protection of sections to be masked when applying fillers such as sealants and the like to joints, or when applying paints.

### Background of the Invention

Masking tape in wide use has conventionally had paper tape as the backing layer. However, such masking tape has had the following disadvantages. (1) The primer or coating penetrates the backing layer and seeps into the adhesive layer, causing deterioration of the paper backing layer and breaking, and increasing the adhesive strength of the masking tape such that adhesive is left after peeling off the tape. (2) The paper backing layer dries when the humidity of the environment falls during winter, etc., also leading to problems such as breaking and adhesive residue after peeling off the tape.

Masking tape has been proposed which has a backing layer comprising a plastic film tape. This solves the problems (1) and (2) mentioned above, but creates another problem (3). That is, (3) because the hand tearability of the masking tape is poor (it cannot be easily torn by hand), the masking procedure becomes difficult.

In this regard, a number of patent documents have proposed pressure sensitive adhesive tapes which have a backing layer comprising plastic film tape with good hand tearability. Examples thereof may be found in Japanese Examined Patent Publication Nos. SHO 51-47459, SHO 51-48775, SHO 55-39196 and SHO 58-51055, Japanese Unexamined Utility Model Publication No. SHO 63-60451 and Japanese Unexamined Patent Publication No. HEI 5-59334. All of these patent documents disclose masking tapes provided with an easily tearable section over the entire backing layer or on the edge of the backing layer, for greater tearability of the adhesive tape. However, when the easily tearable section is provided in this manner, the masking tape tends to break, and thus the peeling procedure cannot be carried out rapidly.

### Summay of the Present Invention

An adhesive tape is provided in accordance with the present invention that overcomes the shortcomings of the prior art. The adhesive tape includes a backing layer that comprises plastic having good hand tearability when cut at a desired length, and which does not tear upon its removal from the section being masked, to thus allow speedy removal of the tape.

More specifically, the present invention relates to adhesive tape which comprises the following features:
(1) a tape-like backing layer which includes a tape-like plastic film;
(2) an adhesive layer on one principal surface of said backing layer; and
(3) an easily tearable section provided in a lengthwise direction at roughly the center with respect to the width of said tape-like backing layer.

Preferably, for improved results, particularly as a masking tape, the adhesive tape also comprises:
(4) a light-tacky section or non-tacky section provided in a lengthwise direction on the side of the surface of the adhesive layer which is to be contacted with a substrate to be adhered to, at roughly the center with respect to the width of the adhesive layer facing said easily tearable section.

### Brief Description of the Drawings

Fig. 1 is a plane view of tape with a groove running lengthwise at the center of the tape-like backing layer according to an embodiment of the present invention.

Fig. 2 is a plane view of tape with a groove running lengthwise at the center of the tape-like backing layer according to an embodiment of the present invention.

Fig. 3 is a plane view of tape with a groove running lengthwise at the center of the tape-like backing layer according to an embodiment of the present invention.

Fig. 4 is a plane view of tape with a groove running lengthwise at the center of the tape-like backing layer according to an embodiment of the present invention.

Fig. 5 is a plane view of tape with a groove running lengthwise at the center of the tape-like backing layer according to an embodiment of the present invention.

Fig. 6 is a drawing showing the action of peeling off masking tape in a direction of about 180° with respect to the lengthwise direction in the which the masking tape is applied.

Fig. 7 is a process drawing showing the process of production of masking tape according to an embodiment of the present invention.

Fig. 8 is a perspective view of a masking tape roll according to an embodiment of the present invention.

Fig. 9 is a sectional view of masking tape according to an embodiment of the present invention.

Fig. 10 is a drawing showing the action of tearing off masking tape according to the present invention.

Fig. 11 is an angle-inserted drawing showing the action of peeling off applied masking tape.

Fig. 12 is a drawing showing the process of applying a light-tacky or non-tacky substance onto the center of the adhesive layer of masking tape according to the present invention.

Fig. 13 is a drawing showing the pattern of the metal treating roll used in Example 1.

Fig. 14 is a drawing showing the pattern of the metal treating roll used in Example 2.

Fig. 15 is a drawing showing the pattern of the metal treating roll used in Example 6.

Fig. 16 is a partial sectional view of the metal treating roll used in Example 1.

### Detailed Description of the Preferred Embodiments

The tape according to the present invention is provided with an easily tearable section along the lengthwise direction at roughly the center with respect to the width of the backing layer. Consequently, the masking tape has good hand tearability when torn off at a desired length, and it does not tear or split lengthwise when peeled off from the section being masked.

The width of both edges of the backing layer of tape of the present invention which is not provided with the easily tearable section is preferably 2 mm or greater, and more preferably 4 mm or greater. If the edges are too thin, the tape will tear or split lengthwise when peeled off.

The easily tearable section of the tape-like backing layer comprising a tape-like plastic film according to the present invention may be formed by providing a plurality of depressions or holes at the center of the backing along the lengthwise direction, by forming a lengthwise groove having a zigzag shape with a plurality of angles or a lengthwise groove with a meandering shape, or by wearing the surface of the backing with sandpaper or an abrasive surface. Preferably, the center of the backing is provided with a plurality of depressions or holes formed along the lengthwise direction or with a lengthwise groove with a plurality of angles. Hand tearing is thus made easier, and it is possible to easily avoid tearing and splitting of the tape during its removal.

The depressions or holes are preferably formed by pressing a tool such as treating roll with a plurality of boring needles, or other hard, sharpened sections, directly on the surface of the backing or via the adhesive layer. That is, the treatment may be provided to either or both principle surfaces of the backing layer before or after the adhesive is coated thereon. The shape of the holes may be as desired by appropriately selecting the shape of the above-mentioned hard, sharpened sections, e.g. circular, elliptical, triangular, quadrilateral, crescent, V-shaped, enlarged-center cross-shaped, slit-shaped, etc. They need not, however, be formed with a clear outline. They may also be fine holes, which appear to the naked eye to be mere flaws. In the case of slits, they may be formed in the direction of either the width or the length of the tape. The terms "holes" and "slits" as used throughout this application are meant to include depressions or grooves of any depth within the backing layer as well as those which actually penetrate the backing layer.

Holes with angular shapes, such as triangular or quadrilateral, have the effect of facilitating tearing of the tape by hand, and holes without angles have the effect of resisting breaking. Also, holes which penetrate the backing layer have the effect of facilitating tearing of the tape by hand, while holes which do not penetrate it have the effect of resisting breaking. Slits oriented in the direction of the width of the tape have the effect of facilitating tearing of the tape by hand, while slits oriented in the direction of the length of the tape have the effect of resisting breaking. The length of the holes as measured at the section of greatest length (for example, the diagonal in the case of quadrilaterals) is preferably in the range of 0.005-3 mm, and more preferably in the range of 0.01-2 mm.

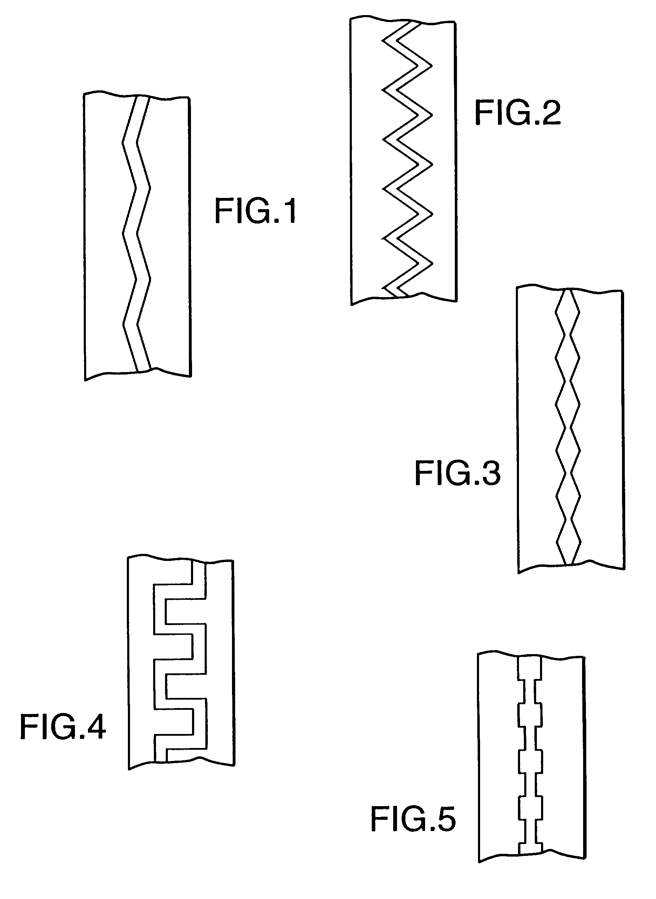

In the case of a groove, it preferably runs along the lengthwise direction and is bent with a plurality of angles or curves in a meandering manner. Examples of such grooves as seen from above are shown in Figs. 1-5. Grooves with angles have the effect of facilitating tearing of the tape by hand, while grooves which meander without angles have the effect of resisting breaking.

The tape according to the present invention also preferably is provided with a light-tacky section or non-tacky section that is provided in a lengthwise direction on the side of the surface of the adhesive layer which is to be contacted with a substrate to be adhered to, at roughly the center with respect to the width of the adhesive layer facing the easily tearable section. This allows the tape to be rapidly removed, since there is no breaking as a result of torn pieces or splits along the easily tearable section. Furthermore, because there is no light-tacky section or non-tacky section at the edges, the edges of the tape do not curl during the working or painting procedure. A plurality of holes are particularly preferred. This more definitely prevents splitting of the tape along the lengthwise direction during its removal.

The above-mentioned light-tacky or non-tacky section preferably includes a plurality of holes or a lengthwise groove at the center of the adhesive. This reduces the area of the above-mentioned adhesive in contact with the substrate, thus lowering the adhesive strength or almost or completely eliminating it, to allow removal of the tape without breaking.

A plurality of holes or lengthwise groove on both the backing layer and adhesive layer is preferably formed after the adhesive layer is laid on the backing layer, by pressing a tool with a plurality of boring needles, or other hard, sharpened sections, on the adhesive layer. By this method, a plurality of holes or lengthwise groove may be formed at the same position simultaneously on both the backing layer and the adhesive layer, for an "easily tearable section" and a "light-tacky section".

The light-tacky section or non-tacky section most preferably contains a light-tacky or non-tacky substance. The type and form of such substance is not limited so long as its adhesive strength is sufficiently low at normal temperature, or is virtually or completely non-adhesive. Examples thereof include acrylic acid ester copolymers, styrene-butadiene copolymers, acrylonitrile-butadiene copolymers, polyacrylic acid, polyurethane resins, polyester resins, polyamide resins, polyolefin resins, polyvinyl acetate resins, polyvinyl chloride resins, polyvinyl alcohol resins, etc. These resins are convenient when applied onto the adhesive layer as a solution, dispersion or melt and then dried or hardened. The above-mentioned light-tacky or non-tacky substance may also be an inorganic or organic filler. Such a filler may be dispersed in water by an emulsion or the like, or applied in solid powder form.

The non-tacky substance used may be a release agent dispersed in a solvent such as water. Preferred of these light-tacky or non-tacky substances are water-soluble or water-dispersable resins, water-dispersable release agents or water-dispersable organic fillers. Since these substances exhibit their effect even at a low coating weight, their amounts may be reduced to shorten the drying time after application. Reducing the drying time will improve the productivity of the masking tape of the present invention. By having a low coating weight, it is possible to avoid appearance defects due to hardbands and the like, which occur with increased thickness at the sections where the above-mentioned light-tacky or non-tacky substance is applied. Furthermore, since the solvent or dispersion medium is water, these substances are also preferred from the point of view of environmental health. The preferred water-soluble resin is an acrylic acid ester copolymer, the preferred water-dispersable resin is a polyurethane resin or a polyolefin resin such as polyethylene resin, and the preferred water-dispersable release agent is a long-chain alkyl release agent. Most preferred of these are water-soluble acrylic acid ester copolymers, water-dispersable polyurethane resins and water-dispersable polyethylene resins. These substances are preferred because they prevent transfer of the adhesive or the substances themselves onto the surface of the adhesion substrate, and thus there is virtually no spoiling of the surface of the substrate after the masking tape of the present invention is peeled off. The following are presented as concrete useful examples of light-tacky or non-tacky substances.

| | |
|---|---|
| Acrylic acid ester copolymers: | Toa Gosei, KK. "ALON HD-5" |
| | Toa Gosei, KK. "ALON HD-1" |
| | Toa Gosei, KK. "ALON HD-11" |
| | |
| Polyurethane resin: | Toa Gosei, KK. "Neotan UE-1402" |
| | |
| Polyethylene resin: | Sumitomo Seika, KK. "Zaikusen A" |
| | |
| Long-chain alkyl release agent: | Nihon Shokubai Kagaku, KK. "RP-18W-01" |
| | |
| Organic filler: | Seikosha, KK. "NEW-AIDE" |

Further, the adhesive strength of the light-tacky or non-tacky substance itself is preferably 80 g/18 mm or less, and more preferably 40 g/18 mm or less. Substances with adhesive strength of 20 g/18 mm or less are generally classified as non-tacky.

Coating means, such as a roller, may be used to add the above-mentioned light-tacky or non-tacky substance to the above-mentioned light-tacky or non-tacky section, either after formation of the light-tacky or non-tacky section, or during formation of the light-tacky or non-tacky section, as described below.

The present invention has a backing layer made of plastic. One preferred type of backing layer is an oriented film with a thickness of 10-50 µm. This type of film has a high crystallinity and is thus easily torn by hand, while its strong modulus or stiffness makes it resistant to wrinkles when applied. If the thickness of the oriented film is less than 10 µm then it will be prone to wrinkling, and if greater than 50 µm then the impact resilience will increase, causing the sections bent during application to curl and peel off. The oriented film is preferably a biaxially oriented film. This is because with biaxially oriented films cracks readily spread from the easily tearable section, making the tape easy to tear by hand.

Another preferred type of backing layer to be used according to the present invention is a non-oriented film with a thickness of 50-100 µm. This type of film has a low degree of crystallization and thus is resistant both to breaking when removed and wrinkling when applied. If the non-oriented film is thinner than 50 µm it will have a low modulus or stiffness and be prone to wrinkling, while if it is thicker than 100 µm the bent sections will become bulky, causing a notable difference between the worked or painted outer surface and the masked section, thus impairing the appearance of sealant, etc. after the masking tape is peeled off. The above-mentioned film material is preferably polyester, polypropylene, polyethylene, polyamide, vinyl chloride resin (including EVA), polystyrene, polycarbonate, cellulose acetate, cellophane, acrylic resin, or a blend or a layered film thereof.

Particularly preferred of these resins are polyester and polypropylene, because the crack spreads easily from the easily tearable section upon their stretching.

The range for the tensile strength of the backing layer to be used for the tape of the present invention, prior to forming the easily tearable section, is preferably 4 to 20 kg/18 mm, more preferably 5 to 16 kg/18 mm, and even more preferably 6 to 12 kg/18 mm. If it is less than 4 kg/18 mm, the crack will spread too easily from the easily tearable section during removal, making speedy removal difficult. On the other hand, if it is greater than 20 kg/18 mm, the tape cannot be easily torn by hand.

The adhesive to be used for the tape of the present invention may be any commonly used adhesive. As examples there may be mentioned adhesives prepared by combining a tackifying resin with a natural rubber or by combining a tackifying resin with a synthetic rubber, or acrylic adhesives, silicone adhesives, etc. In selecting the adhesive, consideration should be given to the fact that for a masking tape according to the present invention, it will be principally used outdoors, e.g. at construction sites, and will thus endure much exposure to ultraviolet rays. Accordingly, acrylic adhesives, silicone adhesives and hydrogenated synthetic rubber such as SEBS (styrene-ethylenebutylene-styrene) are superior to rubber adhesives for that application. Nevertheless, rubber adhesives may also be satisfactorily used if sufficient amount of an anti-oxidant or the like is added thereto, or if the plastic film is colored to adequately block out ultraviolet rays.

The method of coating these adhesives is not particularly limited, and it may be a method of coating by applying and drying an aqueous dispersion or solution, a method of coating by melt extrusion lamination, or a method of applying an oligomer and then crosslinking it with ultraviolet or electron rays. Moreover, the adhesive may be strip or zone coated on the backing layer to leave a non-coated center section that can be used to provide a non-tacky center section as described above. Furthermore, when the adhesive is used to form the adhesive layer on the above-mentioned backing layer, primer treatment or corona discharge treatment may be performed if necessary to increase the adhesion between the layers. For example, if the backing layer is polypropylene, the material used as the primer is preferably polypropylene chloride. Also, if necessary the backing layer may be subjected to primer treatment after corona discharge treatment.

For sufficient adhesion on rough surfaces at lower temperatures in the winter, the adhesive must have good adhesion, and particularly a certain degree of adhesion even at winter atmospheric temperatures of 0-5°C. To fulfill this requirement, the adhesive preferably has a glass transition temperature of -30°C or lower. If the Tg is any higher, the adhesion on rough surfaces during the winter will be insufficient, making the masking tape extremely difficult to handle.

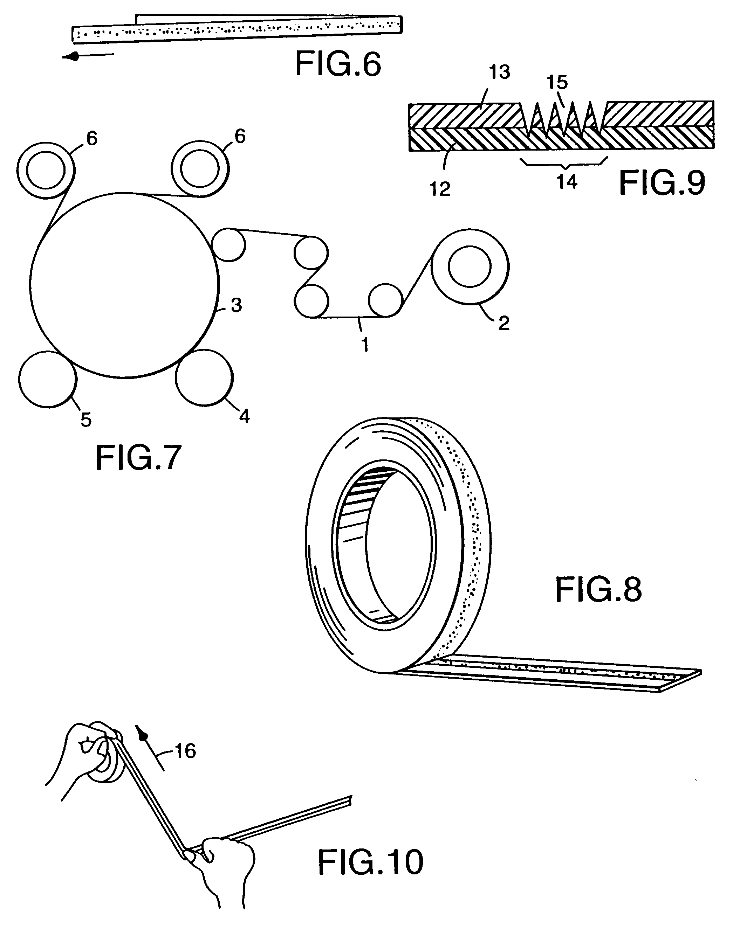

The tendency of the masking tape to break, as mentioned earlier, depends on the pattern and depth of the holes in cases where the above-mentioned easily tearable section contains a plurality of holes, and is also greatly affected by the adhesive strength and the method of removal. That is, the greater the adhesive strength of the adhesive used, the more prone it is to breaking. By placing the above-mentioned easily tearable section at the center of the masking tape, the frequency of tearing during removal is greatly lowered in comparison with masking tape wherein the section is on the edge, but in the case of adhesives with greater adhesive strength, the backing layer sometimes splits from the center of the masking tape depending on the method of removal, thus leaving the masking tape on the substrate. There is a high possibility of masking tape breaking when, as shown in Fig. 6, the masking tape is rapidly peeled off in the direction of the arrow 11 at an angle close to 180° to the lengthwise direction in which the masking tape is applied. To improve this condition, it was found that when a roll is used to form the easily tearable section which contains the above-mentioned plurality of holes, etc., applying a light-tacky or non-tacky substance onto the adhesive at the same time is very effective to prevent breaking of the tape.

An embodiment of the process for producing masking tape according to the present invention is shown in Fig. 7. In this drawing, a plastic film to be used as the backing, or masking tape prepared by coating an adhesive layer onto a plastic film backing 1 is fed from a master roll 2 while being taken up by a metal backing roll 3, and a treating roll 4 with a plurality of boring needles pressing on the plastic film or the adhesive layer side of the masking tape, while the plastic film or masking tape is wound up, to continuously form an easily tearable section containing the above-mentioned plurality of holes, etc. The treating roll may also be heated. After the easily tearable section is formed by the treating roll 4, the tape is slit to the desired width by a normal rotary blade 5 and wound up with a dispenser roll 6. An embodiment of the masking tape of the present invention may be produced in this manner. The masking tape is usually slit to a width of 10-50 mm. Fig. 8 is a perspective view of a masking tape roll produced in this manner.

Fig. 9 is a sectional view of an example of masking tape according to the present invention. In this drawing, 12 is a backing layer, 13 is an adhesive layer and 14 is an easily tearable section containing a plurality of holes. Also, 15 is a light-tacky section including the plurality of holes formed on the adhesive layer. The pattern of the holes on this masking tape may be varied by changing the shape of the cutting surface of the treating roll, and the depth of the holes may be varied depending on the pressing force of the treating roll. This method is publicly known, and is disclosed in detail in, for example, Japanese Examined Patent Publication No. SHO 51-48775. However, whereas in the method described in this publication a slit-forming rotary blade and nick-forming roll are situated so as to form small nicks at the edge of the adhesive tape, in the method of the present invention a treating roll is situated directly at the center between a pair of slit-forming rotary blades, so as not to nick the edges of the adhesive tape (masking tape). For formation of the easily tearable section containing the plurality of holes, etc., it may be added just before slitting to make a narrow small roll after making the masking tape in the manner heretofore described, or a full-width small roll having an easily tearable sections already formed at the desired sections may be made at the full tape width, and then worked to form a narrow roll with lace slits to locate the easily tearable section at the center with respect to the width. Alternatively, an uncoated plastic film may have the easily tearable section added prior to the coating of the adhesive.

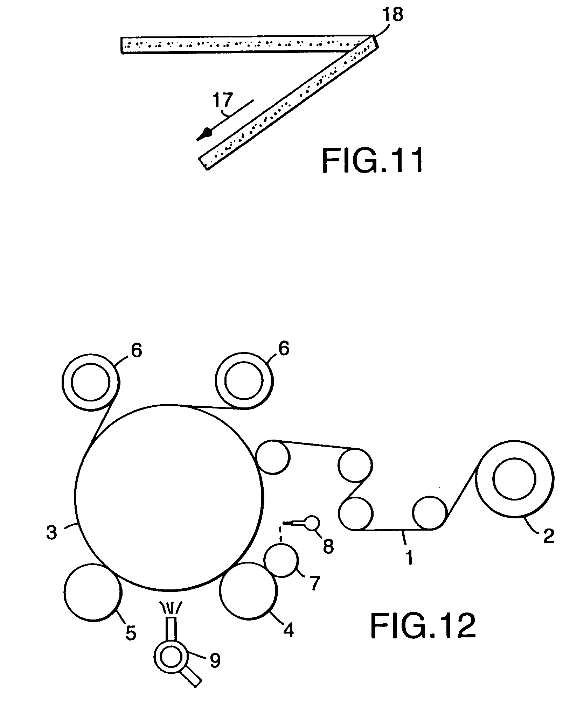

Masking tape obtained in this manner is shown in Fig. 10. If a finger is placed at the center of the back of the masking tape to stretch it strongly in the direction of the arrow 16, the crack will spread from the easily tearable section formed at the center of the tape, allowing the masking tape to be easily torn by hand without using a cutter or other tool. Furthermore, since the easily tearable section runs lengthwise along the center of the masking tape, there is very little risk of the tape tearing when it is peeled off. In other words, in the case of the conventional plastic film which is tearable because of nicks or a low-strength section at the edge of the adhesive tape, during removal of the adhesive tape there has been a high probability of breaking in the direction of the angle 17 as shown in Fig. 11, and thus a high possibility of it tearing from the edge because of stress concentrated at the edges of the adhesive tape at the part indicated by 18. With the masking tape of the present invention, however, there are no nicks at the edges of the tape-like backing film, and thus it is possible to peel off the masking tape without tearing it.

Fig. 12 shows the steps of application of a light-tacky or non-tacky substance at the center of the surface of the adhesive layer of masking tape according to the present invention. In this drawing, a container holding a solution or dispersion of a light-tacky or non-tacky substance is used to impregnate a felt roll 7 therewith, and this is contacted with the treating roll to transfer an appropriate amount of the liquid to the surface of the roll, to apply the solution or dispersion of the light-tacky or non-tacky substance onto the adhesive surface at the same time the easily tearable section is formed on the masking tape. The applied light-tacky or non-tacky substance is dried with a drier 9 or oven, etc. until winding.

### EXAMPLES

### Example 1

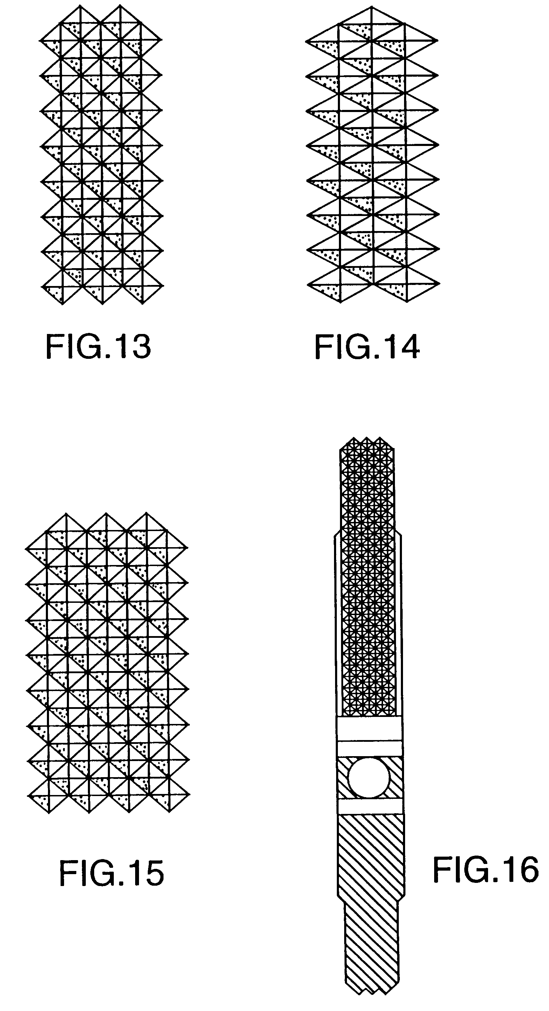

A long roll of 50 µm thick, 150 mm wide biaxially oriented polypropylene film (Toyobo, KK., PYLEN (trademark) OTP-2261, both sides corona discharge treated, primer treatment with chlorinated polypropylene performed only on adhesive-applied side) was prepared. Using this film as a backing layer, one side was coated with a toluene solution containing a long-chain alkyl release agent and dried to a post-drying thickness of 0.1 µm, while the primer-treated side was coated with an acrylic adhesive (Soken Chemical Co., SK-1501B with crosslinking agent M-5A added at 4.0 parts by weight) to a post-drying thickness of 40 µm, and the film was introduced into an oven at 100°C and then dried and wound into a roll to prepare a preliminary master roll of masking tape (hereunder referred to as "preliminary masking tape"). Preliminary masking tape unwound from the master roll was first pressed, as shown in Fig. 7, with a 3 mm wide metal treating roll (a partial sectional view of which is shown in Fig. 16) containing a plurality of boring needles in the pattern shown in Fig. 13 around the perimeter of the roll, thus producing a plurality of fine holes, after which the tape was slit to a width of 18 mm with a conventional rotary blade and wound up on a dispenser roll to a prescribed length, to obtain the final masking tape. The nip pressure of the treating roll was 2.0 kgf/cm.

### Example 2

Masking tape 18 mm in width was obtained in the same manner as in Example 1, except that the treating roll used was one with boring needles as shown in Fig. 14.

### Comparison 1

The master roll prepared in Example 1 was slit without using the above-mentioned treating roll, to obtain masking tape 18 mm in width.

### Comparison 2

The master roll prepared in Example 1 was scratched by pressing a treating roll, prepared by using #80 sandpaper to cover the surface of a steel roll with no boring needles over double-sided adhesive tape, at a nip pressure of 4.0 kgf/cm, and then pressing a rotary blade against the center of the scratched section to slit it and thus obtain 18 mm wide masking tape. Here, the scratches were made at the edges of the masking tape.

### Examples 3 and 4

A master roll was obtained in the same manner as in Example 1, except that biaxially oriented polyethylene terephthalate film 38 µm thick and 150 mm wide (SI00C-38, product of Diafoil Hoechst, KK.) was used as the backing layer, and the treating roll shown in Fig. 13 and 14 (both 3 mm in width) was used to obtain masking tape 18 mm in width.

### Comparison 3

Masking tape 18 mm in width was obtained by slitting the master roll prepared in Example 3 without using a treating roll.

### Comparison 4

Masking tape 18 mm in width was obtained in the same manner as in Comparison 2, except that the master roll of preliminary masking tape was the master roll prepared in Example 3.

### Examples 5-13

Master rolls (for Examples 5 and 6) were obtained in the same manner as in Example 1, except that biaxially oriented polyethylene terephthalate film 25 µm thick and 150 mm wide (Diafoil Hoechst, KK., S110C-25) was used as the backing layer. However, in Example 6 the pattern of the treating roll (5 mm in width) was the one shown in Fig. 15. Also, the same film was used to prepare separate master rolls (Examples 7-13) by the same method, using as the adhesive a lower-adhesive strength acrylic adhesive (Toa Gosei Chem. KK., TM-262 with crosslinker). Various patterns and roll pressures were employed to obtain masking tapes 18 mm in width. The treating roll types and nip pressures are shown in Table 1.

### Comparison 5

Masking tape 18 mm in width was obtained by slitting the master roll prepared in Example 5 without using a treating roll.

### Comparison 6

Masking tape 18 mm in width was obtained in the same manner as in Comparison 2, except that the master roll of the preliminary masking tape was the master roll prepared in Example 5.

### Comparison 7

Masking tape 18 mm in width was obtained in the same manner as in Comparison 2, except that the master roll of the preliminary masking tape was the master roll prepared in Example 7.

### Examples 14 and 15

A master roll of a masking tape was prepared in the same manner as in Example 1, except that the backing layer used was 30 µm thick, 150 mm wide biaxially oriented polypropylene film (Toyobo, KK., PYLEN (trademark) OTP-2261, both sides corona discharge treated, primer treatment with chlorinated polypropylene performed only on adhesive-applied side). An aqueous solution of an acrylic acid ester copolymer (Toa Gosei, KK. "ALON HD-5") diluted with water to a solid content of 2.0 wt% was applied with felt around the perimeters of scratching roll having the patterns shown in Figs. 13 and 15, respectively (3 mm and 5 mm in width, respectively), and the treating rolls were pressed onto the adhesive layer side of the preliminary masking tape at a nip pressure of 2.0 kgf/cm to form a plurality of holes while uniformly applying the acrylic acid ester copolymer onto the surface of the adhesive layer, after which continuous slits were formed to obtain masking tape 18 mm in width.

### Comparison 8

Masking tape 18 mm in width was obtained by slitting the master roll prepared in Example 14 without using a treating roll.

### Examples 16-21

Masking tapes for Examples 16, 17, 18, 19, 20 and 21 were obtained in the same manner as in Examples 2, 4, 5, 6, 9 and 11, respectively, except that the working of the preliminary masking tape was carried out changing the method shown in Fig. 7 to the method shown in Fig. 12. The non-tacky substance used in these Examples was the same as used for Example 14.

### Example 22

Masking tape 18 mm in width was obtained in the same manner as in Example 20, except that the backing layer used was 40 µm thick, 150 mm wide biaxially oriented polypropylene film (Yuka Sansei, KK., SANORIENT PB-262, both sides corona discharge treated, primer treatment with chlorinated polypropylene performed only on adhesive-applied side), and the treating roll (5 mm in width) had the pattern shown in Fig. 15.

### Example 23

Masking tape 18 mm in width was obtained in the same manner as in Example 19, except that the acrylic acid ester copolymer was replaced with another acrylic acid ester copolymer (Toa Gosei, KK., "ALON HD-1").

### Example 24

Masking tape 18 mm in width was obtained in the same manner as in Example 19, except that the acrylic acid ester copolymer was replaced with another acrylic acid ester copolymer (Toa Gosei, KK., "ALON HD-11").

### Example 25

Masking tape 18 mm in width was obtained in the same manner as in Example 19, except that the acrylic acid ester copolymer was replaced with a polyethylene resin (Sumitomo Seika, KK., "ZAIKUSEN A").

### Example 26

Masking tape 18 mm in width was obtained in the same manner as in Example 19, except that the acrylic acid ester copolymer was replaced with a polyurethane resin (Toa Gosei, KK., "NEOTAN UE-1402").

### Example 27

Masking tape 18 mm in width was obtained in the same manner as in Example 19, except that the acrylic acid ester copolymer was replaced with a long-chain alkyl release agent (Nihon Shokubai Kagaku, KK., "RP-18W-01").

The properties of the masking tapes obtained in the above-mentioned examples and comparisons are given in Table 1. The properties shown in Table 1 were evaluated in the following manner.

### 1) Adhesive strength and tensile strength:

Based on JIS-Z-0237-1991.

### 2) Hand tearability:

Force required to tear the 18 mm wide masking tape by hand, as compared with commercially available 18 mm wide WASHI tape (available from Sumitomo 3M Limited as product "Masking Tape #2479H").
- VG:: easier to tear by hand than WASHI tape.
- G:: same force required to tear by hand.
- F:: notably harder to tear by hand than WASHI tape.
- B:: unable to tear the tape by hand.

### 3) Breaking resistance

Masking tape 60 mm long is pasted onto precasted concrete (Nozawa, KK., ASROCK (trademark)), and sufficient finger pressure is applied. After about 20 minutes, the end of the masking tape is taken and rapidly peeled off at an angle of about 180° and a speed of about 10 m/min. In cases where the tape breaks during removal, the broken end of the tape is taken and the peeling is resumed until the entire tape is removed off.
- G:: Removed with no breaking of masking tape or adhesive tape
- F:: Breaking 1-2 times.
- B:: Breaking 3 times or more, breaking soon after peeling resumed, very difficult to peel off.

In the case of G, another test is performed at a faster speed (about 50 m/min) and tapes with no breaking are indicated by VG.

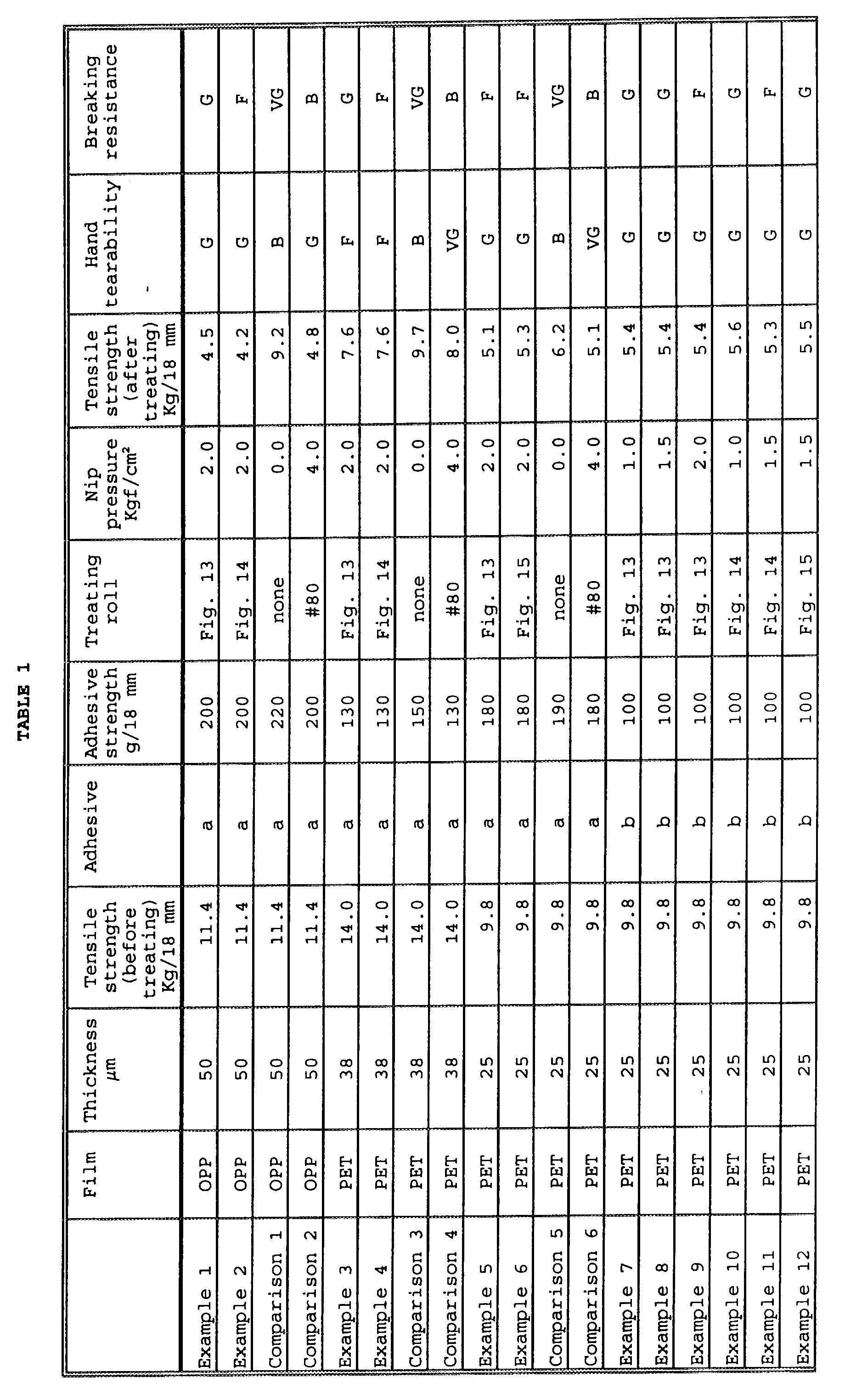

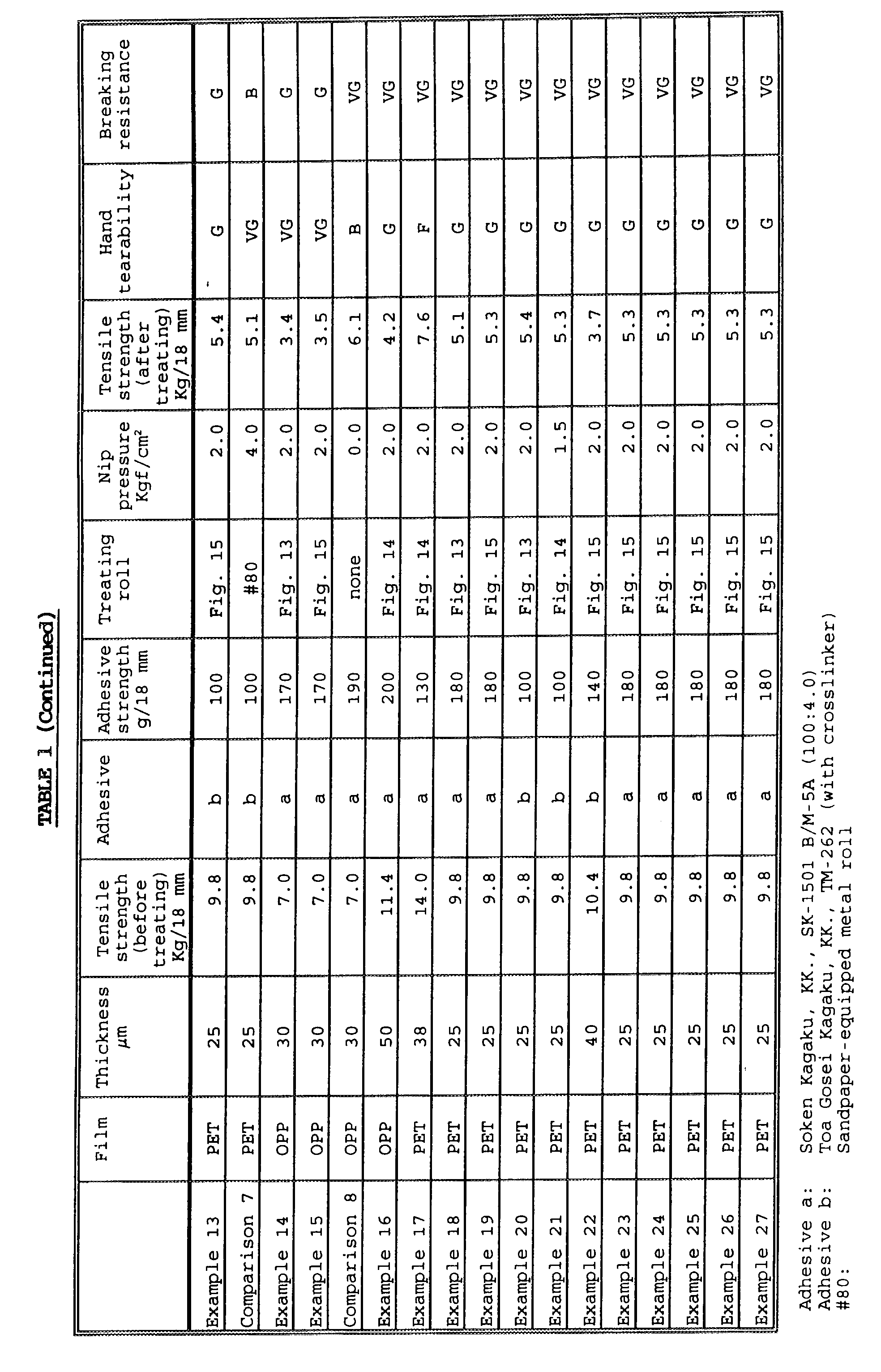

According to the present invention, there is provided masking tape with a plastic backing layer which has good hand tearability when torn at a desired length, which does not break when the tape is peeled off from the masked section, and which may be peeled off rapidly. It is also understood that the tape constructions of the present invention are also applicable to other tapes, particularly those of the type having a backing layer that is difficult to tear or break, such as plastics. Such tape constructions can also find utility in any number of applications. For example, packaging or bundling tapes could benefit from the provision of an easily tearable section or the combination of the easily tearable section with a light-tacky or non-tacky section. It is further understood that with different tapes and applications, other backing layers, treatments, and adhesives could be utilized other than those set out above in the specific examples used as masking tapes.

## Claims

1. A tape construction comprising:
(a) a tape-like backing layer which includes a tape-like plastic film;
(b) an adhesive layer on one principal surface of said backing layer; and
(c) an easily tearable section provided in a lengthwise direction at roughly the center with respect to the width of said tape-like backing layer.

2. The tape construction according to claim 1, further including:
(d) a light-tacky section or non-tacky section provided in a lengthwise direction on the side of the surface of the adhesive layer which is to be contacted with a substrate to be adhered to, at roughly the center with respect to the width of the adhesive layer facing said easily tearable section.

3. The tape construction according to claim 1, wherein said easily tearable section comprises a plurality of depressions or holes that run along the lengthwise direction forming a zigzag line or meandering line.

4. The tape construction according to claim 1, wherein said easily tearable section comprises a groove that runs along the lengthwise direction forming a zigzag line or meandering line.

5. The tape construction according to claim 2, wherein said light-tacky section or non-tacky section comprises a plurality of depressions or holes that run along the lengthwise direction, which are provided on said adhesive layer.

6. The tape construction according to claim 2, wherein said light-tacky section or non-tacky section comprises a groove that runs along the lengthwise direction, which is provided on said adhesive layer.

7. The tape construction according to claim 2, wherein said light-tacky section or non-tacky section includes a light adhesive or non-tacky substance.

8. The tape construction according to claim 1, wherein the longitudinal tensile strength of said backing layer prior to forming the easily tearable section is 4 to 20 kg/18 mm.

9. The tape construction according to claim 1, wherein the easily tearable section is limited in the width of the tape to leave 2 mm or more of backing layer on both sides of the easily tearable section.

10. A tape construction comprising:
(a) a tape-like backing layer which includes a tape-like plastic film;
(b) an adhesive layer on one principal surface of said backing layer;
(c) an easily tearable section provided in a lengthwise direction at roughly the center with respect to the width of said tape-like backing layer; and
(d) a light-tacky section or non-tacky section provided in a lengthwise direction on the side of the surface of the adhesive layer which is to be contacted with a substrate to be adhered to, at roughly the center with respect to the width of the adhesive layer facing said easily tearable section.

11. The tape construction according to claim 10, wherein said easily tearable section comprises a plurality of depressions or holes that run along the lengthwise direction forming a zigzag line or meandering line.

12. The tape construction according to claim 10, wherein said easily tearable section comprises a groove that runs along the lengthwise direction forming a zigzag line or meandering line.

13. The tape construction according to claim 10, wherein said light-tacky section or non-tacky section comprises a plurality of depressions or holes that run along the lengthwise direction, which are provided on said adhesive layer.

14. The tape construction according to claim 10, wherein said light-tacky section or non-tacky section comprises a groove that runs along the lengthwise direction, which is provided on said adhesive layer.

15. The tape construction according to claim 10, wherein said light-tacky section or non-tacky section includes a light adhesive or non-tacky substance.

16. The tape construction according to claim 10, wherein the longitudinal tensile strength of said backing layer prior to forming the easily tearable section is 4 to 20 kg/18 mm.

17. The tape construction according to claim 10, wherein the easily tearable section is limited in the width of the tape to leave 2 mm or more of backing layer on both sides of the easily tearable section.
